# EUROPÄISCHE PATENTSCHRIFT

(11) **EP 3 619 755 B1**
(45) Veröffentlichungstag und Bekanntmachung des Hinweises auf die Patenterteilung: **18.01.2023**
(21) Anmeldenummer: 18725112.9
(22) Anmeldetag: 25.04.2018
(51) Int. Cl.: H01M 10/48, H01M 10/654

(54) **ELEKTRISCHE ENERGIESPEICHERZELLE**
ELECTRIC STORED ENERGY SOURCE
ÉLÉMENT ACCUMULATEUR D'ÉNERGIE ÉLECTRIQUE

(30) Priorität: 04.05.2017 DE 102017207553
(43) Veröffentlichungstag der Anmeldung: 11.03.2020
(73) Patentinhaber: Bayerische Motoren Werke Aktiengesellschaft, 80809 München (DE)
(72) Erfinder: MERTENS, Thomas, 85452 Moosinning (DE)
(86) Internationale Anmeldenummer: PCT/EP2018/060584
(87) Internationale Veröffentlichungsnummer: WO 2018/202500

(56) Entgegenhaltungen:
- EP-B1- 2 673 830
- CN-U- 203 339 274
- DE-A1- 2 414 758
- DE-A1-102011 010 664
- DE-A1-102011 053 439
- DE-C- 436 922
- JP-A- 2014 082 069
- US-A- 4 865 928
- US-A1- 2012 171 528

## Beschreibung

Die vorliegende Erfindung betrifft eine elektrische Energiespeicherzelle für ein Kraftfahrzeug und ein Verfahren zum Betreiben einer elektrischen Energiespeicherzelle. Insbesondere betrifft die Erfindung eine solche Energiespeicherzelle, die zur elektrischen Versorgung eines elektrischen Antriebsaggregats eines Kraftfahrzeuges eingesetzt wird.

Im Stand der Technik sind elektrische Energiespeicherzellen allgemein bekannt und werden bei Kraftfahrzeugen als Teil eines elektrischen Energiespeichers für ein elektrisches Antriebsaggregat eingesetzt.

Damit die Energiespeicherzellen des elektrischen Energiespeichers über ihre Lebensdauer hinweg zuverlässig arbeiten, ist es notwendig, die Energiespeicherzellen beispielsweise während des Betriebes des Kraftfahrzeuges zu kühlen oder in einer Startphase gegebenenfalls aufzuheizen.

Um dies zu bewerkstelligen, werden im Stand der Technik Kühl-/Heizsysteme mit entsprechenden Kühl-/Heizelementen eingesetzt, die räumlich auf einer Außenseite der Energiespeicherzellen bzw. des gesamten Energiespeichers angeordnet sind. Solche Kühl-/Heizsysteme belegen zusammen mit ihren Kühl-/Heizelementen wertvollen Bauraum innerhalb des Kraftfahrzeuges. Solche Kühl-/Heizsysteme sind beispielsweise in den Dokumenten JP 2014 082069 A, CN 203 339 274 U und DE 10 2011 053439 A1 beschrieben.

Aus dem Dokument DE 10 2011 010664 A1 ist ein als Kondensator ausgebildeter Energiespeicher bekannt, der eine als Durchströmungskanal zur Kühlung des Energiespeichers ausgebildete durchgehende Ausnehmung aufweist.

Aus dem Dokument DE 24 14 758 A1 ist eine Akkumulatorenzelle bekannt, in welcher aus Rohren bestehende Kühlelemente derart angeordnet sind, dass sie in Elektrolyten der Akkumulatorenzelle eintauchen.

Vor diesem Hintergrund ist es Aufgabe der vorliegenden Erfindung, eine elektrische Energiespeicherzelle und ein entsprechendes Verfahren zum Betreiben einer Energiespeicherzelle zu schaffen, die eine Bauraumoptimierung zulassen.

Diese Aufgabe wird mit einer elektrischen Energiespeicherzelle gemäß Patentanspruch 1 und einem Verfahren gemäß Patentanspruch 7 gelöst. Weitere bevorzugte Ausführungsformen sind Gegenstand der abhängigen Patentansprüche.

Gemäß einem Aspekt der vorliegenden Erfindung beinhaltet eine elektrische Energiespeicherzelle für ein Kraftfahrzeug ein Gehäuse, das einen Innenraum festlegt, in dem elektrochemische Komponenten der Energiespeicherzelle aufgenommen sind, und eine durch den Innenraum verlaufende Leitung, über die ein Kühl- oder Heizmedium durch den Innenraum geleitet werden kann.

Die erfindungsgemäße elektrische Energiespeicherzelle betrifft insbesondere eine solche, die einen Teil eines elektrischen Energiespeichers für ein elektrisches Antriebsaggregat eines Kraftfahrzeuges bildet. Bevorzugt ist ein solcher Energiespeicher aus einer Vielzahl von Speichermodulen aufgebaut, wobei jedes der Speichermodule wiederum eine Vielzahl erfindungsgemäßer Energiespeicherzellen beinhaltet, die in einer gewünschten Konfiguration zusammengeschaltet sind.

Bei den elektrochemischen Komponenten handelt es sich um einen Aufbau zweier Elektrodenstreifen, die jeweils mit einer entsprechenden Elektrode elektrisch verbunden und durch einen Separator voneinander getrennt sind. Die genannten Elektroden sind beispielsweise aus Kupfer oder Aluminium ausgebildet und mit einem jeweiligen Kontaktierungspol, der außerhalb der elektrischen Energiespeicherzelle zum Anschließen der Energiespeicherzelle zugänglich ist, elektrisch verbunden.

Zumindest die Elektrodenstreifen und der Separator haben in dem Innenraum eine gewickelte Struktur, die dadurch erhalten wird, dass die Elektrodenstreifen und der Separator außerhalb des Gehäuses aufeinander gelegt und zusammengerollt werden. Die so außerhalb des Gehäuses erhaltene gewickelte Struktur wird dann anschließend in den Innenraum des Gehäuses eingesetzt.

Bevorzugt ist die erfindungsgemäße elektrische Energiespeicherzelle eine Lithiumionen-Energiespeicherzelle. In diesem Fall ist einer der Elektrodenstreifen eine Übergangsmetallstruktur und der andere der Elektrodenstreifen eine Kohlenstoff - Struktur, wobei beide Strukturen durch den Separator voneinander getrennt sind. Darüber hinaus ist in den Innenraum des Gehäuses eine nicht-wässrige Elektrolytlösung gefüllt, die das Wandern der Lithiumionen bei Laden/Entladen der elektrischen Energiespeicherzelle ermöglicht.

Erfindungsgemäß verläuft die genannte Leitung durch den Innenraum des Gehäuses der Energiespeicherzelle, sodass das Kühl-/Heizmedium durch den Innenraum der Energiespeicherzelle geleitet werden kann. Bei dem genannten Medium handelt es sich bevorzugt um eine Kühlflüssigkeit. Durch die erfindungsgemäße Anordnung der Leitung innerhalb des Gehäuses steht wertvoller Bauraum außerhalb der Energiespeicherzelle anderen Komponenten zur Verfügung, d.h. erfindungsgemäß kann eine Bauraumoptimierung erzielt werden.

Darüber hinaus wird durch die erfindungsgemäße Anordnung der Leitung das Kühl-/Heizmedium an den entscheidenden Bereich der Energiespeicherzelle, der entweder einer Kühlung oder einer Aufheizung bedarf, geleitet. Dies hat beispielsweise positive Auswirkungen auf die Lebensdauer der Energiespeicherzelle und ermöglicht die Vermeidung von kältebedingten Reichweitenverlusten.

Bevorzugt ist die erfindungsgemäße elektrische Energiespeicherzelle so ausgestaltet, dass die Leitung durch den Innenraum geradlinig oder gebogen verläuft.

Bevorzugt ist die Leitung aus einem elektrisch nicht-leitenden oder einem elektrisch schlecht-leitenden Material gebildet.

Beispiele hierfür sind Kunststoffe oder auch beispielsweise Titan. Besonders bevorzugt sind Materialien die eine elektrische Leitfähigkeit kleiner gleich 2,8 * 106 S/m haben.

Das Gehäuse der erfindungsgemäßen elektrischen Energiespeicherzelle ist ein Quader mit einer Vielzahl von Außenflächen, die den Quader festlegen, wobei die Leitung an einer Außenfläche der Vielzahl von Außenflächen in das Gehäuse eintritt, in dem Innenraum verläuft und an der Außenfläche wieder aus dem Gehäuse austritt.

Mit anderen Worten befindet sich der Bereich, an dem die Leitung in das Gehäuse eintritt, und der Bereich, an dem die Leitung aus dem Gehäuse austritt, auf derselben Außenfläche, die eine der den Quader festlegenden Außenflächen ist. Hierdurch lässt sich bevorzugt das Kühl-/Heizsystem auf einer der Außenflächen des Quaders anschließen.

Bevorzugt wird die Außenfläche der erfindungsgemäßen elektrischen Energiespeicherzelle durch einen Deckel gebildet, der das Gehäuse verschließt.

Hierdurch ergeben sich beispielsweise Fertigungsvorteile.

Besonders bevorzugt ist die erfindungsgemäße elektrische Energiespeicherzelle so ausgebildet, dass die Leitung an einem ersten Kontaktierungspol und/oder an ein einem zweiten Kontaktierungspol, an dem/denen die Energiespeicherzelle zum Anschließen an einen Verbraucher bestimmungsgemäß kontaktiert wird, in das Gehäuse eintritt oder austritt.

Der erste Kontaktierungspol und der zweite Kontaktierungspol sind - das Gehäuse durchdringend - durch entsprechende Kontaktierungselemente mit den entsprechenden Elektroden verbunden. Dies ist eine Notwendigkeit. Die hierbei zwangsläufig zu bildenden Durchbrüche durch das Gehäuse können erfindungsgemäß auch für die Verlegung der Leitung genutzt werden. Ganz besonders bevorzugt verläuft die Leitung durch den ersten und/oder zweiten Kontaktierungspol hindurch.

Weiterhin betrifft die Erfindung ein Verfahren zum Betreiben einer elektrischen Energiespeicherzelle eines Kraftfahrzeuges, welches folgende Verfahrensschritte aufweist:
Messen einer Umgebungstemperatur des Kraftfahrzeuges und/oder einer Umgebungstemperatur der innerhalb des Kraftfahrzeuges angeordneten Energiespeicherzelle; und
Einleiten eines Mediums in einen Innenraum der Energiespeicherzelle, in dem elektrochemische Komponenten der Energiespeicherzelle aufgenommen sind, um die Energiespeicherzelle in Abhängigkeit von der Umgebungstemperatur entweder aufzuheizen oder zu kühlen.

Die entsprechende Energiespeicherzelle ist bevorzugt so aufgebaut, wie es im Vorhergehenden erläutert wurde.

Für das Einleiten des Mediums, beispielsweise einer Flüssigkeit, ist die Energiespeicherzelle an ein entsprechendes Kühl- und/oder Heizsystem angeschlossen.

Die Umgebungstemperatur der Energiespeicherzelle kann beispielsweise dadurch gemessen werden, dass ein Temperaturfühler auf der Energiespeicherzelle angeordnet ist.

Wenn der Energiespeicher des Kraftfahrzeuges eine Vielzahl von Energiespeicherzellen beinhaltet, ist bevorzugt auf jeder Energiespeicherzelle ein Temperaturfühler angeordnet. In diesem Fall sind die den Energiespeicher aufbauenden Energiespeicherzellen über ihre Leitungen bevorzugt parallel an das genannte Kühl- und/oder Heizsystem angeschlossen, sodass jede der Energiespeicherzellen individuell gekühlt und/oder geheizt werden kann.

Alternativ kann nur eine der Vielzahl von Energiespeicherzellen mit einem Temperaturfühler ausgestattet sein, wobei die hierüber gemessene Umgebungstemperatur als Entscheidungskriterium dafür dient, ob alle oder keine der Energiespeicherzellen gekühlt bzw. aufgeheizt werden. In diesem Fall können die Leitungen der einzelnen Energiespeicherzellen in Reihe geschaltet mit dem Kühl- und/oder Heizsystem verbunden sein.

Weiterhin alternativ kann auch die Umgebungstemperatur des Kraftfahrzeuges für die Entscheidung, ob die Energiespeicherzelle(n) gekühlt oder geheizt werden, herangezogen werden. In diesem Fall ist es nicht notwendig, die Energiespeicherzelle(n) mit einem Temperaturfühler auszustatten.

In dem Verfahren ist die Temperatur, auf die die Energiespeicherzelle(n) gekühlt oder geheizt werden, einstellbar.

Bevorzugt beträgt die Umgebungstemperatur, ab der eine Heizung der Energiespeicherzelle einsetzt, kleiner 10°C, bevorzugt 0°C. Dies gilt für alle Varianten der Messung der Umgebungstemperatur, d.h. an einer der Energiespeicherzellen, an jeder der Energiespeicherzellen oder nur in der Umgebung des Kraftfahrzeuges.

Bevorzugt beträgt die Umgebungstemperatur, ab der eine Kühlung der Energiespeicherzelle einsetzt, zwischen 18°C und 22°C, bevorzugt 20°C. Dies gilt für alle Varianten der Messung der Umgebungstemperatur, d.h. an einer der Energiespeicherzellen, an jeder der Energiespeicherzellen oder nur in der Umgebung des Kraftfahrzeuges.

Im Folgenden werden bevorzugte Ausführungsformen einer erfindungsgemäßen Energiespeicherzelle unter Bezug auf die beigefügten Figuren erläutert.
**Figur 1a und 1b** zeigen eine erste bevorzugte Ausführungsform einer erfindungsgemäßen Energiespeicherzelle, wobei Figur 1a eine Schnittansicht entlang einer in Figur 1b gezeigten Schnittlinie 1a-1a darstellt;
**Figur 2a und 2b** zeigen eine nicht erfindungsgemässe Ausführungsform einer Energiespeicherzelle, wobei Figur 2a eine Schnittansicht entlang einer in Figur 1b gezeigten Schnittlinie 2a-2a darstellt;
**Figur 3a und 3b** zeigen eine weiter nicht erfindungsgemässe Ausführungsform einer Energiespeicherzelle, wobei Figur 3a eine Schnittansicht entlang einer in Figur 3b gezeigten Schnittebene 3a-3a darstellt.

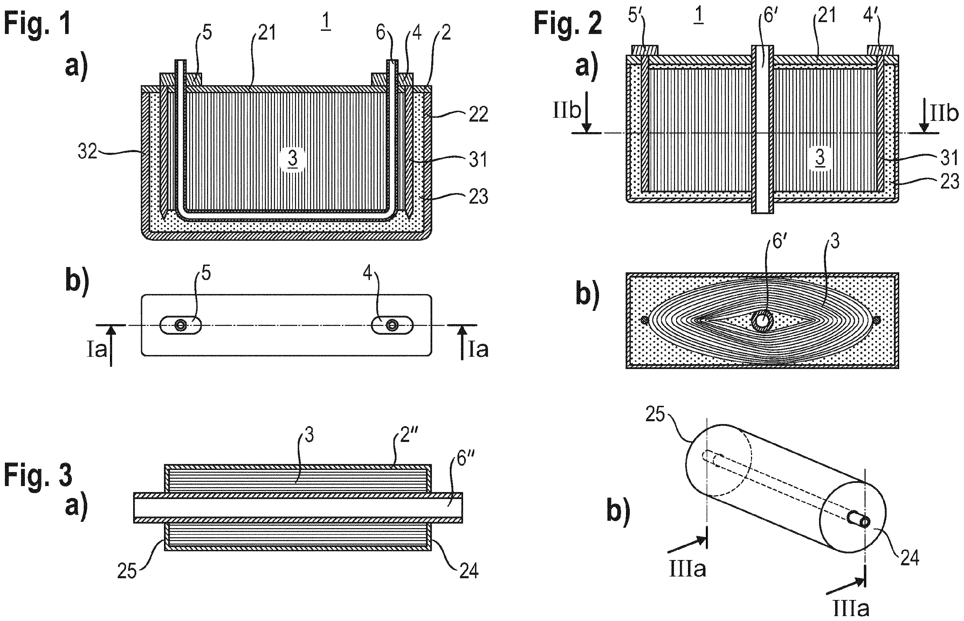

Figur 1a und b zeigen eine erste bevorzugte Ausführungsform einer erfindungsgemäßen Energiespeicherzelle 1, wobei diese ein Gehäuse 2 aufweist.

Das Gehäuse 2 umfasst bevorzugt einen Deckel 21 und einen Gehäusebehälter 22, der durch den Deckel 21 verschlossen wird. Der Deckel 21 und/oder der Gehäusebehälter 22 können aus einem Metall oder einem Kunststoff gebildet sein.

Das Gehäuse 2 legt einen Innenraum 23 fest, in dem elektrochemische Komponenten der erfindungsgemäßen Energiespeicherzelle 1 aufgenommen sind.

Bevorzugt ist die Energiespeicherzelle eine Lithiumionen-Energiespeicherzelle und beinhaltet einen ersten Elektrodenstreifen (Übergangsmetallstruktur) und einen zweiten Elektrodenstreifen (Kohlenstoff -Strukturen), wobei beide Elektrodenstreifen durch einen Separator voneinander getrennt sind. Die beiden Elektrodenstreifen sind zusammen mit dem Separator zu einer gewickelten Struktur 3 aufgewickelt und jeweils mit einer Elektrode 31, 32 elektrisch verbunden.

Darüber hinaus ist in den Innenraum des Gehäuses 2 eine nicht-wässrige Elektrolytlösung gefüllt, die das Wandern der Lithiumionen bei Laden/Entladen der elektrischen Energiespeicherzelle ermöglicht.

Das Gehäuse 2 ist insgesamt als Quader ausgebildet, wobei der Deckel 21 eine Außenfläche einer Vielzahl von den Quader festlegenden Außenflächen bildet.

Auf dieser durch den Deckel 21 gebildeten Außenfläche sitzt ein erster Kontaktierungspol 4 und ein zweiter Kontaktierungspol 5, an denen die erfindungsgemäße Energiespeicherzelle 1 bestimmungsgemäß kontaktiert bzw. angeschlossen wird. Der erste Kontaktierungspol 4 und der zweite Kontaktierungspol 5 sind, wenn der Deckel aus einem Metall gebildet ist, unter Zwischenlage von Isolatoren auf dem Deckel befestigt und durch entsprechende Durchgänge hindurch mit den Elektroden 31, 32 jeweils elektrisch verbunden.

Erfindungsgemäß durchstößt eine Leitung 6 den ersten Kontaktierungspol 4, verläuft in dem Innenraum 3 geradlinig bis zu einer dem Deckel 21 gegenüberliegenden Seite, von dort entlang der gegenüberliegenden Seite, und ab einem bestimmten Punkt wieder geradlinig in Richtung des Deckels 21, wo sie den zweiten Kontaktierungspol 5 ebenfalls durchstößt und nach außen mündet. Der Verlauf ist in dieser Ausführungsform so gewählt, dass die Leitung 6 in dem Innenraum 23 auf einer Außenoberfläche der gewickelten Struktur 3 verläuft und nicht durch sie hindurch.

Der Verlauf der Leitung 6 in dem Innenraum 23 könnte auch andersartig sein.

Die Leitung 6 ist bevorzugt aus einem elektrisch isolierenden Material oder zumindest aus einem elektrisch schlecht-leitenden Material, wie beispielsweise Titan, ausgebildet.

Figur 1b zeigt, dass die Leitung 6 den ersten Kontaktierungspol 4 und den zweiten Kontaktierungspol 5 jeweils mittig durchstößt.

Die Leitung 6 kann bestimmungsgemäß an eine nicht gezeigtes Kühl- und/oder Heizsystem angeschlossen werden, dass zur Kühlung/Heizung der Energiespeicherzelle 1 eine Flüssigkeit durch die Leitung 6 pumpen kann.

Durch die erfindungsgemäße Anordnung der Leitung 6 kann Bauraum außerhalb der Energiespeicherzelle 1 eingespart werden und gleichzeitig sehr gut in dem Bereich gekühlt bzw. geheizt werden, wo es notwendig ist.

Figuren 2a und b zeigen eine nicht erfindungsgemässe Ausführungsform einer Energiespeicherzelle 1'. Solche Elemente, die mit denen der ersten bevorzugten Ausführungsform identisch sind, tragen dieselben Bezugszeichen und werden nicht nochmals erläutert.

Die zweite Ausführungsform unterscheidet sich von der ersten insbesondere durch die Ausgestaltung der Leitung 6', die, wie in Figur 2 gezeigt den Deckel 21 in der Mitte durchstößt und geradlinig zu einer dem Deckel 21 gegenüberliegenden Seite verläuft, wo sie das Gehäuse 2 wiederum durchstößt und nach außen mündet.

Wie in der entsprechenden Figur ersichtlich ist, durch stößt die Leitung 6' keinen der Kontaktierungspol 4', 5', die deshalb keine Öffnungen aufweisen und durch einen sehr kleinen Durchbruch in dem Deckel 21 mit den jeweiligen Elektroden kontaktiert sind.

Die Figur 2b zeigt außerdem, dass in dieser zweiten Ausführungsform die Leitung 6' durch die gewickelte Struktur 3 hindurchverläuft.

Die Figuren 3a und 3b zeigen eine dritte nicht erfindungsgemässe Ausführungsform einer elektrischen Energiespeicherzelle 1". Solche Elemente, die mit denen der ersten und zweiten bevorzugten Ausführungsform identisch sind, tragen wiederum dieselben Bezugszeichen und werden nicht nochmals erläutert.

Der wesentliche Unterschied der dritten Ausführungsform besteht in der Form des Gehäuses 2", dass, wie in Figur 3 gezeigt, als Rohr ausgebildet ist. Die elektrochemischen Komponenten 3 sind in dieser Ausführungsform ebenfalls als gewickelte Struktur ausgebildet, sodass sie in das Rohr bündig eingeführt sind.

Die gewickelte Struktur 3 wird in dieser Ausführungsform ebenfalls durch eine Leitung mittig durchlaufen, wobei die Leitung 6" an einer ersten Stirnseite 24 in das Rohr eintritt und an einer zweiten Stirnseite 25 aus dem Rohr austritt.

In allen bevorzugten Ausführungsformen kann die jeweilige Leitung an das bereits erwähnte Kühl-und/oder Heizsystem angeschlossen werden, derart, dass zur Kühlung/Heizung der Energiespeicherzelle eine Flüssigkeit durch die Leitung hindurch gepumpt werden kann. Ein entsprechendes Verfahren zum Betreiben der erläuterten Energiespeicherzellen kann in Abhängigkeit von der Umgebungstemperatur der entsprechenden Energiespeicherzelle durchgeführt werden.

Die Umgebungstemperatur wird bevorzugt durch einen nicht gezeigten Temperaturfühler, der beispielsweise auf dem Deckel 21 bzw. dem Rohr angeordnet ist, erfasst.

In Abhängigkeit von der Höhe der gemessenen Umgebungstemperatur kann eine Entscheidung getroffen werden, ob die entsprechende Energiespeicherzelle zu kühlen oder zu heizen ist.

## Patentansprüche

1. Elektrische Energiespeicherzelle (1) für ein Kraftfahrzeug, welche aufweist:
ein Gehäuse (2), das einen Innenraum (23) festlegt, in dem elektrochemische Komponenten der Energiespeicherzelle (1) aufgenommen sind; und
eine durch den Innenraum verlaufende Leitung (6), über die ein Kühl- oder Heizmedium durch den Innenraum (23) geleitet werden kann,
wobei die elektrochemischen Komponenten eine aus zwei Elektrodenstreifen und einem Separator, der die zwei Elektrodenstreifen voneinander trennt, gebildete gewickelte Struktur (3) mit einer Außenoberfläche umfasst,
wobei das Gehäuse (2) ein Quader ist mit einer Vielzahl von Außenflächen, die den Quader festlegen und
wobei die Leitung (6) an einer Außenfläche der Vielzahl von Außenflächen in das Gehäuse (2) eintritt, in dem Innenraum (23) auf der Außenoberfläche verläuft und an der Außenfläche wieder aus dem Gehäuse (2) austritt.

2. Elektrische Energiespeicherzelle (1) gemäß Patentanspruch 1, wobei die Leitung (6) durch den Innenraum (23) geradlinig oder gebogen verläuft.

3. Elektrische Energiespeicherzelle (1) gemäß Patentanspruch 1 oder 2, wobei die Leitung (6) aus einem elektrisch nicht-leitenden oder einem elektrisch schlecht-leitenden Material gebildet ist.

4. Elektrische Energiespeicherzelle (1) gemäß einem der Patentansprüche 1 bis 3, wobei die Außenfläche durch einen Deckel (21) gebildet wird, der das Gehäuse (2) verschließt.

5. Elektrische Energiespeicherzelle (1) gemäß einem der Patentansprüche 1 bis 4, wobei die Leitung (6) an einem ersten Kontaktierungspol (4) und/oder an ein einem zweiten Kontaktierungspol (5), an dem/denen die Energiespeicherzelle zum Anschließen an einen Verbraucher bestimmungsgemäß kontaktiert wird, in das Gehäuse (2) eintritt oder austritt.

6. Verfahren zum Betreiben einer elektrischen Energiespeicherzelle (1) eines Kraftfahrzeuges nach einem der Ansprüche 1 bis 5, welches folgende Verfahrensschritte aufweist:
- Messen einer Umgebungstemperatur des Kraftfahrzeuges und/oder einer Umgebungstemperatur der innerhalb des Kraftfahrzeuges angeordneten Energiespeicherzelle (1); und
- Einleiten eines Mediums in den Innenraum der Energiespeicherzelle (1) über die Leitung (6) entlang der Außenoberfläche der gewickelten Struktur (3), um die Energiespeicherzelle (1) in Abhängigkeit von der Umgebungstemperatur entweder aufzuheizen oder zu kühlen.

## Claims

1. Electrical energy storage cell (1) for a motor vehicle, which has:
a housing (2), which defines an interior (23), in which electrochemical components of the energy storage cell (1) are held; and
a line (6) that runs through the interior and via which a cooling or heating medium can be conducted through the interior (23),
wherein the electrochemical components comprise a wound construction (3) which is formed from two electrode strips and a separator, which isolates the two electrode strips from one another, and has an outer surface,
wherein the housing (2) is a cuboid with a multiplicity of outer faces, which define the cuboid; and
wherein the line (6) enters the housing (2) at one outer face of the multiplicity of outer faces, runs on the outer surface in the interior (23) and exits the housing (2) again at the outer face.

2. Electrical energy storage cell (1) according to Patent Claim 1, wherein the line (6) runs through the interior (23) in a straight line or in a bent manner.

3. Electrical energy storage cell (1) according to Patent Claim 1 or 2, wherein the line (6) is made of an electrically non-conductive material or a material with poor electrical conductivity.

4. Electrical energy storage cell (1) according to one of Patent Claims 1 to 3, wherein the outer face is formed by a cover (21), which closes the housing (2).

5. Electrical energy storage cell (1) according to one of Patent Claims 1 to 4, wherein the line (6) enters or exits the housing (2) at a first contact-making pole (4) and/or at a a second contact-making pole (5) at which the energy storage cell is contact-connected for connection to a load as intended.

6. Method for operating an electrical energy storage cell (1) of a motor vehicle according to one of Claims 1 to 5, which has the following method steps:
- measuring an ambient temperature of the motor vehicle and/or an ambient temperature of the energy storage cell (1) arranged inside the motor vehicle; and
- introducing a medium into the interior of the energy storage cell (1) via the line (6) along the outer surface of the wound structure (3) in order to either heat up or cool the energy storage cell (1) depending on the ambient temperature.

## Revendications

1. Elément accumulateur d'énergie électrique (1) pour un véhicule automobile, présentant :
un boîtier (2) qui définit un espace intérieur (23) dans lequel sont logés des composants électrochimiques de l'élément accumulateur d'énergie (1) ; et
une conduite (6) s'étendant à travers l'espace intérieur et par laquelle un agent réfrigérant ou chauffant peut être guidé à travers l'espace intérieur (23),
dans lequel les composants électrochimiques comprennent une structure enroulée (3) pourvue d'une surface extérieure, composée de deux bandes d'électrodes et d'un séparateur qui sépare les deux bandes d'électrodes l'une de l'autre,
dans lequel le boîtier (2) est un parallélépipède avec une pluralité de surfaces extérieures qui définissent le parallélépipède, et
dans lequel la conduite (6) entre dans le boîtier (2) au niveau d'une surface extérieure de la pluralité de surfaces extérieures, s'étend dans l'espace intérieur (23) sur la surface extérieure et ressort du boîtier (2) au niveau de la surface extérieure.

2. Elément accumulateur d'énergie électrique (1) selon la revendication 1, dans lequel la conduite (6) s'étend à travers l'espace intérieur (23) de manière rectiligne ou courbe.

3. Elément accumulateur d'énergie électrique (1) selon la revendication 1 ou 2, dans lequel la conduite (6) est formée à partir d'un matériau non conducteur électrique ou mauvais conducteur électrique.

4. Elément accumulateur d'énergie électrique (1) selon l'une quelconque des revendications 1 à 3, dans lequel la surface extérieure est formée par un couvercle (21) qui ferme le boîtier (2).

5. Elément accumulateur d'énergie électrique (1) selon l'une quelconque des revendications 1 à 4, dans lequel la conduite (6) entre dans ou sort du boîtier (2) au niveau d'un premier pôle de mise en contact (4) et/ou d'un un deuxième pôle de mise en contact (5) où l'élément accumulateur d'énergie est mis en contact correctement pour la connexion à un consommateur.

6. Procédé d'exploitation d'un élément accumulateur d'énergie électrique (1) d'un véhicule automobile selon l'une quelconque des revendications 1 à 5 présentant les étapes de procédé suivantes consistant à :
- mesurer une température ambiante du véhicule automobile et/ou une température ambiante de l'élément accumulateur d'énergie (1) disposé à l'intérieur du véhicule automobile ; et
- introduire un agent dans l'espace intérieur de l'élément accumulateur d'énergie (1) par l'intermédiaire de la conduite (6) le long de la surface extérieure de la structure enroulée (3) afin de chauffer ou de refroidir l'élément accumulateur d'énergie (1) en fonction de la température ambiante.
